# EUROPÄISCHE PATENTSCHRIFT

(11) **EP 1 415 097 B1**
(45) Veröffentlichungstag und Bekanntmachung des Hinweises auf die Patenterteilung: **02.11.2005**
(21) Anmeldenummer: 02792560.1
(22) Anmeldetag: 10.05.2002
(51) Int. Cl.: F16C 11/06

(54) **KUGELGELENK**
BALL JOINT
ARTICULATION A ROTULE

(30) Priorität: 10.08.2001 DE 10139564
(43) Veröffentlichungstag der Anmeldung: 06.05.2004
(73) Patentinhaber: AUDI AG, 85045 Ingolstadt (DE)
(72) Erfinder: KUR, Jaromir, 85051 Ingolstadt (DE)
(74) Vertreter: Asch, Konrad
(86) Internationale Anmeldenummer: PCT/EP2002/005133
(87) Internationale Veröffentlichungsnummer: WO 2003/014585

(56) Entgegenhaltungen:
- DE-A- 4 226 986
- FR-A- 1 057 016
- US-A- 2 876 029
- US-A- 3 602 560
- US-A- 5 152 628
- US-A- 5 609 433
- US-A- 5 641 235

## Beschreibung

Die Erfindung betrifft ein Kugelgelenk, insbesondere für Fahrwerksteile von Kraftfahrzeugen, gemäß dem Oberbegriff des Patentanspruches 1 bzw. 5.

Die DE 40 32 541 A beschreibt ein Kugelgelenk, bei dem der Gelenkzapfen mit Gelenkkugel aus Stahl und das Gelenkgehäuse aus einem Werkstoff mit wesentlich geringerem E-Modul, nämlich aus Kunststoff, gefertigt ist. Es sind aber auch Kugelgelenke bekannt, bei denen das Gelenkgehäuse aus einer Leichtmetall-Legierung gebildet ist, beispielsweise bei in Fahrwerkteilen von Kraftfahrzeugen wie Querlenker, etc. integrierten Gelenken.

Weiter ist es bekannt, in dem Gehäuse eines Kugelgelenks eine Verstärkung bzw. Verstärkungen aus einem höherfesten werkstoff einzusetzen. Die US 5 641 235 A beschreibt ein derartiges Kugelgelenk mit den merkmalen des Oberbegriffs des Anspruchs 1 bzw. 5.

Aufgabe der Erfindung ist es, ein Kugelgelenk der gattungsgemäßen Art vorzuschlagen, das bei geringem zusätzlichen Aufwand eine robustere Konstruktion aufweist.

Diese Aufgabe wird erfindungsgemäß mit den kennzeichnenden Merkmalen des Patentanspruches 1 bzw. 5 gelöst. Vorteilhafte Weiterbildungen der Erfindung sind den weiteren Ansprüchen entnehmbar.

Erfindungsgemäß ist/sind in dem Gehäuse (eine) Verstärkung(en) aus einem höherfesten Werkstoff, insbesondere ebenfalls aus Stahl eingesetzt, die bei hoher Lasteinleitung, bei einem Kraftfahrzeug z. B. beim Überfahren eines Randsteines, eine erhöhte Festigkeit und Haltbarkeit des Kugelgelenkes sicherstellen.

Die Verstärkung(en) ist ein Stift bzw. sind Stifte, der/die in das Gelenkgehäuse je nach verwendetem Werkstoff eingepresst, eingegossen, eingespritzt, etc. ist bzw. sind.

Die Verstärkung(en) ist bzw. sind so ausgerichtet, dass sie in der Hauptbelastungsrichtung des Gelenkes der Gelenkkugel gegenüber liegt bzw. liegen und somit eine hervorragende Gehäuseaussteifung und Überlastsicherung darstellt bzw. darstellen.

Die Anordnung kann besonders vorteilhaft dabei so getroffen sein, dass die Verstärkung(en) zusätzlich bei fortgeschrittenem Gelenkverschleiß eine Notlauffunktion erfüllt bzw. erfüllen, in dem sie bei z. B. Stahl auf Stahl Gleitverhältnissen mit der Gelenkkugel in direktem Kontakt geraten.

Ein Ausführungsbeispiel der Erfindung ist im folgenden mit weiteren Einzelheiten näher erläutert. Die schematische Zeichnung zeigt einen Längsschnitt entlang der Mittelachse eines Kugelgelenkes mit einem Gehäuse aus einer Aluminium-Legierung und mit in dem Gehäuse angeordneten Verstärkungen aus Stahl.

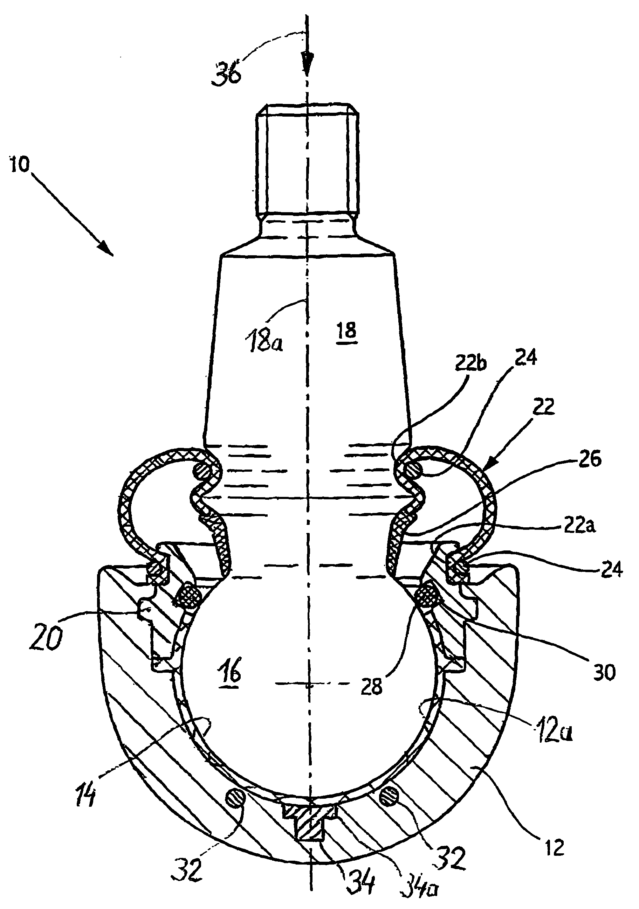

Das in der Zeichnung dargestellte Kugelgelenk 10 setzt sich im wesentlichen zusammen aus einem Gehäuse 12, einer Lageraufnahme 14, einer Gelenkkugel 16 mit einem angeformten Gelenkzapfen 18, einem mit dem Gehäuse 12 fest verbundenen Haltering 20 und einer gummielastischen Abdichtmanschette 22. Soweit nicht beschrieben, ist das Kugelgelenk 10 bekannter Bauart.

Das Kugelgelenk 10 bzw. das Gelenkinnere ist mittels der Abdichtmanschette 22 abgedichtet, wobei die Abdichtmanschette 22 an der gehäuseseitigen, ringförmigen Dichtlippe 22a und an der ebenfalls ringförmigen Dichtlippe 22b für den Gelenkzapfen 18 mittels Spannringe 24 dicht angepresst ist. In dem Bereich zwischen der Gelenkkugel 16 und dem Gelenkzapfen 18 ist in bekannter Weise ein Abstandsring 26 angeordnet.

Die Gelenkkugel 16 ist in der kalottenförmigen Lageraufnahme 14 schwenk- und drehbar gelagert, wobei die Lageraufnahme 14 auch mehrteilig sein kann (entsprechend bekannten Kugelgelenkkonstruktionen).

In dem Haltering 20 ist als zweite Abdichtung des Kugelgelenkes 10 ein gummielastischer Dichtring 28 (ein sogenannter O-Ring) in einer Ringnut 30 angeordnet, der den Bereich unterhalb des Dichtringes 28 zwischen Gelenkkugel 16, Lageraufnahme 14 und Gehäuse 12 abdichtet. Es versteht sich, dass in diesem unterhalb der Abdichtmanschette 22 liegendem Bereich ein entsprechendes Schmiermittel bzw. Gelenkfett eingebracht ist.

Die Gelenkkugel 16 mit Gelenkzapfen 18 ist aus Stahl mit einem hohen E-Modul hergestellt und in der Lageraufnahme 14 gelagert. Es versteht sich, dass die Lageraufnahme 14 aus einem entsprechend geeignetem Lagermaterial aus Kunststoff hergestellt ist.

Das einen geringeren E-Modul aufweisende Gehäuse 12 des Kugelgelenkes 10 ist aus einer Aluminium-Legierung hergestellt.

In das etwa becherförmige Gehäuse 12 des Kugelgelenkes 10 sind Verstärkungen 32,34 eingesetzt, die ebenfalls aus Stahl mit einem hohen E-Modul gefertigt sind.

Dabei sind die etwa senkrecht zur Gelenkzapfen-Mittelachse 18a in entsprechenden Bohrungen des Gehäuses 12 eingepressten Stifte 32 so angeordnet, dass sie in der Hauptbelastungsrichtung (Pfeil 36) der Gelenkkugel 16 gegenüber liegen und relativ nahe zur kalottenförmigen Gehäuseausnehmung 12a positioniert sind.

Zusätzlich oder alternativ ist als Verstärkung der Stift 34 ebenfalls aus Stahl in eine entsprechende Bohrung des Gehäuses 12 eingesetzt, dessen Mittelachse etwa in der verlängerten Gelenkzapfen-Mittelachse 18a und etwa senkrecht zur Kugelmitte der Gelenkkugel 16 ausgerichtet ist. Der Stift 34 trägt einen im Durchmesser vergrößerten Kopf 34a, dessen der Lageraufnahme 14 zugewandte Stirnfläche konkav entsprechend dem Radius der Gelenkkugel 16 gestaltet ist.

Neben der durch die Stifte 32,34 gebildeten Verstärkung und Aussteifung des Gehäuses 12 können die Verstärkungen 32,34 bei extremen Gelenkverschleiß durch direkten Kontakt mit der Gelenkkugel 16 auch eine Notlauffunktion des Kugelgelenkes 10 sicherstellen.

Die Erfindung ist nicht auf das dargestellte Ausführungsbeispiel beschränkt. Anstelle der zwei Stifte 32 können auch weitere Stifte 32 vorgesehen sein, die sowohl senkrecht zur Zeichnungsebene (wie dargestellt) oder beispielsweise auch in einem Winkel dazu ausgerichtet sein können. Der Stift 34 kann alternativ oder zusätzlich vorgesehen sein, es können auch mehrere Stifte 34 um den Gelenkkugelmittelpunkt herum angeordnet sein. Anstelle von Verstärkungen aus Stahl können auch andere, einen höheren E-Modul aufweisende Verstärkungen verwendet sein, z. B. Sintermetalle, Keramik, etc.

Das Gehäuse 12 kann auch wie an sich bekannt aus Kunststoff mit ggf. Faserverstärkung hergestellt sein.

## Patentansprüche

1. Kugelgelenk (10), insbesondere für Fahrwerkteile von Kraftfahrzeugen, mit einem Gelenkgehäuse (12), mindestens einer Lageraufnahme (14) und einem Gelenkzapfen (18) mit einer in der Lageraufnahme (14) gelagerten Gelenkkugel (16), sowie einer Abdichtmanschette (22) zwischen Gelenkzapfen (18) und Gehäuse (12), wobei der Gelenkzapfen (18) aus Stahl und das Gehäuse (12) aus einem Werkstoff mit geringerem E-Modul besteht und in dem Gehäuse (12) Verstärkungen (32) aus einem höherfesten Werkstoff eingesetzt sind **dadurch gekennzeichnet, dass** die Verstärkungen zwei oder mehr Stifte (32) aufweisen, die in Hauptbelastungsrichtung des Gelenkes (10) der Gelenkkugel (16) gegenüberliegen und im wesentlichen senkrecht zur Mittelachse (18a) des Gelenkzapfens (18) im Gehäuse (12) verlaufen.

2. Kugelgelenk nach Anspruch 1, **dadurch gekennzeichnet, dass** die Stifte (32) in Nähe der Ausnehmung (12a) des Gehäuses (12) für die Lageraufnahme (14) im Gehäuse positioniert sind.

3. Kugelgelenk nach Anspruch 1 oder 2, **dadurch gekennzeichnet, dass** die Stifte (32) aus Stahl gefertigt sind.

4. Kugelgelenk nach einem der vorhergehenden Ansprüche, **dadurch gekennzeichnet, dass** die Verstärkungen (32, 34) zusätzlich einen etwa senkrecht zur Kugelmitte der Gelenkkugel (16) ausgerichteten Stift (34) aufweisen, der in Hauptbelastungsrichtung des Gelenkes der Gelenkkugel (16) gegenüberliegt.

5. Kugelgelenk (10), insbesondere für Fahrwerkteile von Kraftfahrzeugen, mit einem Gelenkgehäuse (12), mindestens einer Lageraufnahme (14) und einem Gelenkzapfen (18) mit einer in der Lageraufnahme (14) gelagerten Gelenkkugel (16), sowie einer Abdichtmanschette (22) zwischen Gelenkzapfen (18) und Gehäuse (12), wobei der Gelenkzapfen (18) aus Stahl und das Gehäuse (12) aus einem Werkstoff mit geringerem E-Modul besteht und in dem Gehäuse (12) eine Verstärkung (34) aus einem höherfesten Werkstoff eingesetzt ist **dadurch gekennzeichnet, dass** die Verstärkung einen etwa senkrecht zur Kugelmitte der Gelenkkugel (16) ausgerichteten Stift (34) aufweist, der in Hauptbelastungsrichtung des Gelenkes der Gelenkkugel (16) gegenüber liegt.

6. Kugelgelenk nach Anspruch 4 oder 5, **dadurch gekennzeichnet, dass** der etwa senkrecht zur Kugelmitte der Gelenkkugel (16) ausgerichtete Stift (34) mit einem Kopfabschnitt (34a) versehen ist, der unmittelbar benachbart zur Lageraufnahme (14) in das Gehäuse (12) eingebettet ist.

7. Kugelgelenk nach Anspruch 6, **dadurch gekennzeichnet, dass** der Kopfabschnitt (34a) des Stifts (34) entsprechend dem Radius der Gehäuseausnehmung (12a) des Gehäuses (12) konkav ausgebildet ist.

8. Kugelgelenk nach einem der vorhergehenden Ansprüche 4 bis 7, **dadurch gekennzeichnet, dass** der Stift (34) aus Stahl gefertigt ist.

## Claims

1. Ball joint (10), particularly for running gear parts of motor vehicles, having a joint housing (12), at least one bearing housing (14) and a joint pin (18) with a joint ball (16) mounted in the bearing housing (14), and a sealing sleeve (22) between the joint pin (18) and the housing (12), whereby the joint pin (18) is made of steel and the housing (12) is made of a material with a lower modulus of elasticity and reinforcements (32) of a higher strength material are set into the housing (12), **characterised in that** the reinforcements have two or more rods (32) which lie opposed to the joint ball (16) in the main loading direction of the joint (10) and run substantially perpendicular to the central axis (18a) of the joint pin (18) in the housing (12).

2. Ball joint according to claim 1, **characterised in that** the rods (32) are positioned in the housing close to the recess (12a) in the housing (12) for the bearing housing (14).

3. Ball joint according to claim 1 or 2, **characterised in that** the rods (32) are made of steel.

4. Ball joint according to one of the previous claims, **characterised in that** the reinforcements (32, 34) additionally have a rod (34) oriented approximately perpendicular to the centre of the joint ball (16), said rod lying opposed to the joint ball (16) in the main loading direction of the joint.

5. Ball joint (10), particularly for running gear parts of motor vehicles, having a joint housing (12), at least one bearing housing (14) and a joint pin (18) with a joint ball (16) mounted in the bearing housing (14), and a sealing sleeve (22) between the joint pin (18) and the housing (12), whereby the joint pin (18) is made of steel and the housing (12) is made of a material with a lower modulus of elasticity and a reinforcement (34) of a higher strength material is set into the housing (12), **characterised in that** the reinforcement has a rod (34) oriented approximately perpendicular to the centre of the joint ball (16), said rod lying opposed to the joint ball (16) in the main loading direction of the joint.

6. Ball joint according to claim 4 or 5, **characterised in that** the rod (34) oriented approximately perpendicular to the centre of the joint ball (16) is provided with a head section (34a) which is embedded in the housing (12) directly adjoining the bearing housing (14).

7. Ball joint according to claim 6, **characterised in that** the head section (34a) of the pin (34) is designed concave corresponding to the radius of the recess (12a) of the housing (12).

8. Ball joint according to one of the previous claims 4 to 7, **characterised in that** the pin (34) is made of steel.

## Revendications

1. Articulation à rotule (10), en particulier pour des parties de trains roulants de véhicules automobiles, avec un boîtier d'articulation (12), au moins un logement de palier (14) et un tourillon d'articulation (18), muni d'une rotule d'articulation (16) montée dans le logement de palier (14), ainsi qu'une manchette d'étanchéité (22) entre le tourillon d'articulation (18) et le boîtier (12), le tourillon d'articulation (18) étant constitué d'acier et le boîtier (12) étant constitué d'un matériau ayant un module E diminué et, dans le boîtier (12), sont insérés des renforts (32) réalisés en un matériau à plus haute résistance, **caractérisée en ce que** les renforts présentent deux broches (32) ou plus, situées en opposition dans la direction de sollicitation principale de l'articulation (10) de la rotule d'articulation (16) et s'étendant sensiblement perpendiculairement par rapport à l'axe médian (18a) du tourillon d'articulation (18) dans le boîtier (12).

2. Articulation à rotule selon la revendication 1, **caractérisée en ce que** les broches (32) sont positionnées à proximité de l'évidement (12a) du boîtier (12), pour le logement de palier (14) dans le boîtier.

3. Articulation à rotule selon la revendication 1 ou 2, **caractérisée en ce que** les broches (32) sont fabriquées en acier.

4. Articulation à rotule selon l'une des revendications précédentes, **caractérisée en ce que** les renforts (32, 34) présentent, en plus, une broche (34) orientée à peu près perpendiculairement par rapport au centre de sphère de la rotule d'articulation (16), située en opposition, dans la direction de sollicitation principale de l'articulation de la rotule d'articulation (16).

5. Articulation à rotule (10), en particulier pour des parties de trains roulants de véhicules automobiles, avec un boîtier d'articulation (12), au moins un logement de palier (14) et un tourillon d'articulation (18) muni d'une rotule d'articulation (16) montée dans le logement de palier (14), ainsi qu'une manchette d'étanchéité (22) entre le tourillon d'articulation (18) et le boîtier (12), le tourillon d'articulation (18) étant constitué d'acier et le boîtier (12) étant constitué d'un matériau ayant un module E diminué et, dans le boîtier (12) étant inséré un renfort (34) réalisé en un matériau à plus haute résistance, **caractérisée en ce que** le renfort présente une broche (34), orientée à peu près perpendiculairement par rapport au centre de sphère de la rotule d'articulation (16) et située en opposition, dans la direction de la sollicitation principale de l'articulation de la rotule d'articulation (16).

6. Articulation à rotule selon la revendication 4 ou 5, **caractérisée en ce que** la broche (34), orientée à peu près perpendiculairement par rapport au centre de sphère de la rotule d'articulation (16), est munie d'un tronçon de tête (34a) noyé dans le boîtier (12), directement voisine du logement de palier (14).

7. Articulation à rotule selon la revendication 6, **caractérisée en ce que** le tronçon de tête (34a) de la broche (34) est de forme concave, de manière correspondante au rayon de l'évidement de boîtier (12a) du boîtier (12).

8. Articulation à rotule selon l'une des revendications 4 à 7 précédentes, **caractérisée en ce que** la broche (34) est fabriquée en acier.
